# EUROPÄISCHE PATENTSCHRIFT

(11) **EP 3 096 898 B1**
(45) Veröffentlichungstag und Bekanntmachung des Hinweises auf die Patenterteilung: **16.09.2020**
(21) Anmeldenummer: 15708184.5
(22) Anmeldetag: 03.03.2015
(51) Int. Cl.: B21J 9/02, B21J 15/12, B21K 25/00, B23P 6/00, B23P 15/04

(54) **VERFAHREN ZUM VERSCHLIESSEN EINES LOCHES UND BAUTEIL**
METHOD FOR CLOSING A HOLE AND COMPONENT
PROCÉDÉ DE FERMETURE D'UN TROU ET COMPOSANT

(30) Priorität: 17.03.2014 DE 102014204912
(43) Veröffentlichungstag der Anmeldung: 30.11.2016
(73) Patentinhaber: Siemens Aktiengesellschaft, 80333 München (DE)
(72) Erfinder: HESELHAUS, Andreas, 40235 Düsseldorf (DE); NÖRTERSHÄUSER, Philipp, 45481 Mülheim an der Ruhr (DE); PAUL, Uwe, 40882 Ratingen (DE); STEMMLER, Michael, 40545 Düsseldorf (DE)
(86) Internationale Anmeldenummer: PCT/EP2015/054384
(87) Internationale Veröffentlichungsnummer: WO 2015/139945

(56) Entgegenhaltungen:
- EP-A1- 0 470 868
- EP-A1- 1 027 943
- EP-A1- 1 147 849
- WO-A1-2013/066680
- JP-A- H09 108 883
- JP-A- 2008 188 666
- US-A- 4 953 777
- US-A1- 2003 118 419
- US-B1- 7 631 664

## Beschreibung

Die Erfindung betrifft ein Verfahren zum Verschließen eines Loches mit einer Lochinnenwand mit einem Innengewinde mit zumindest einem Innengewindegang in einem Bauteil aus einem Grundwerkstoff sowie ein Bauteil.

Bei Gussteilen zur Herstellung von hohlen Bauteilen mit Superlegierung wie z.B. gekühlte Turbinenschaufeln gibt es oft fertigungsbedingte Löcher, die wieder verschlossen werden sollen. Bei der gießtechnischen Herstellung hohler Gasturbinenschaufeln werden sowohl Quarz- als auch Platinstifte verwendet, um die keramischen Kerne während des Einfüllens und der Erstarrung der Schmelze in die Formschale in der richtigen Position zu halten. Beide technischen Lösungsansätze weisen sowohl Vor- als auch Nachteile auf. So entstehen nach dem Herauslaugen der keramischen Kerne bei der Verwendung von Quarzstiften, Löcher in den Schaufelwänden. Dies tritt bei Verwendung von Platinstiften nicht auf, diese sind jedoch wiederum sehr teuer, was zu einem signifikanten Anstieg der Stückkosten führt. Die Kerndurchführungen in den Wänden müssen meistens nachträglich verschlossen werden, um einen Verlust von Kühlluft zu vermeiden.

Bei gegossenen Bauteilen werden oft Kernhalterungen, die zu Löchern z.B. im Kronenboden der Blattspitze von Turbinenlaufschaufeln führen, mit einem Kegelstopfen versehen. Bei Laufschaufeln können somit aufgrund des speziellen Herstellungsprozesses diese Kernhaltelöcher im Kronenboden der Schaufelspitze entstehen. Diese werden nach dem Gießen häufig in einem Schweißverfahren wieder verschlossen. Nachteil eines jeden Schweißprozesses ist die Neigung zur Bildung von Mikrorissen in der Wärmeeinflusszone bzw. im Schweißgut und/oder Grundwerkstoff. Die Risse können Lebensdauer mindernd wirken, da diese durch thermische und mechanische aber auch korrosive Belastungen im Betrieb der Bauteile wachsen und die Bauteile nachhaltig schädigen. Außerdem wird die Reparierbarkeit von Schaufeln mit langen Rissen im Schaufelspitzenbereich stark reduziert. Da derartige Risse z.B. in Schaufelspitzen also aus technischen und kommerziellen Gründen vermieden werden müssen, ist das Verschließen der Löcher mittels eines Schweißprozesses nicht optimal. Zusätzlich kann sich der unterschiedliche Ausdehnungskoeffizient von Grundwerkstoff und Schweißgut schädlich auf die Lebensdauer der Komponente im Betrieb auswirken (Reduzierung der LCF Lebensdauer).

Die US 6,454,156 B1 zeigt z.B. Schrauben zum Verschließen von Löchern auf. Auch wurden die Löcher mittels eines Stopfens, der durch Widerstandsschweißen in das Loch eingebracht wurde, geschlossen. Dies ist beispielsweise in der EP 2 340 909 A1 der Fall. Diese Stopfen weisen entweder eine vollumfängliche Oberfläche oder eng beieinander liegende Rillen auf.

Im Stand der Technik werden Löcher in Gasturbinenschaufeln mittels Schrauben/Stopfen und mit Hilfe verschiedener Materialien mit verschiedenen Wämeausdehnungskoeffizienten verschlossen. Diese hat jedoch verschiedene Nachteile. Als Materialen werden z.B. Bor-, Phosphor- oder Silizium verwendet, um den Schmelzpunkt abzusenken und so eine gute diffusive Anbindung bei einer Wärmebehandlung zu erhalten. Diese Elemente gelten jedoch als Verunreinigungen in Superlegierungen, welche im Gasturbinenbereich verwendet werden müssen, und sollten deshalb vermieden werden. Zudem bilden diese Elemente meistens sehr spröde Phasen, so dass die Ermüdungseigenschaften negativ beeinflusst werden.

Zudem weist der Stand der Technik Stopfen-/Schraubenmaterial auf, in welchem ein artfremdes Material, d.h. mit einem höheren Wärmeausdehnungskoeffizienten als das eigentliche Bauteil, verbaut wird. Bei der hohen Einsatztemperatur wirken so ausreichende Druckspannungen, so dass der Stopfen in seiner Position gehalten wird. Problematisch ist jedoch, den Stopfen bei Raumtemperatur oder nicht laufender Maschine in seiner Position zu halten. Außerdem bedeuten unterschiedliche Ausdehnungskoeffizienten für zwei benachbarte Materialien erhöhte Wechselbeanspruchung im Betrieb beim An- und Abfahren, was wiederum die Lebensdauer des Bauteils reduziert.
Als weitere Möglichkeit wird im Stand der Technik angegeben, den Stopfen zu kühlen und durch eine Presspassung in Löcher von Schaufeln zu verbauen. Für eine Presspassung sind sehr enge Toleranzen und eine besonders gute Oberflächengüte Voraussetzung. Dies ist bei Superlegierungen, die häufig nur durch erosives Abtragen bearbeitet werden können, jedoch kaum umzusetzen.
Weiteren Stand der Technik bilden die Druckschriften WO 2013/066680 A1, US 7, 631, 664 B1, JP H09 108883 A und EP 1 147 849 A1. Die WO 2013/066680 A1 offenbart die Oberbegriffe der Ansprüche 1 und 8.
Vorteilhaft Ausgestaltungen mit zweckmäßigen Weiterbildungen der Erfindung sind in den abhängigen Patentansprüchen angegeben.

Die erste Aufgabe der Erfindung ist die Angabe eines Verfahrens zum Verschließen eines Loches, welches die oben genannten Probleme löst. Die zweite Aufgabe der Erfindung ist die Angabe eines Bauteils mit einem Stopfen.
Die erste Aufgabe wird gelöst durch die Angabe eines Verfahrens zum Verschließen eines Loches mit einer Lochinnenwand und einem Innengewinde mit zumindest einem Innengewindegang in einem Bauteil aus einem Grundwerkstoff mit den folgenden Schritten:
- Bereitstellen eines Stopfens mit einem in das Innengewinde fügbaren Außengewinde mit zumindest einem Außengewindegang, und einem Stopfenkopf, wobei der Stopfen aus einem artgleichen und/oder artähnlichen Grundwerkstoff besteht,
- Fügen des Außengewindes in das Innengewinde, so dass der Stopfenkopf zumindest teilweise aus dem Loch ragt,
- Aufbringen einer Kraft durch ein Mittel zumindest teilweise auf den Stopfenkopf, so dass zumindest eine teilweise Verformung des Außengewindes als auch des Stopfenkopfes erzielt wird, wodurch der Stopfen mit dem Bauteil mechanisch fest fixiert wird, wobei die Kraft durch ein Taumeln, insbesondere ein Radialtaumelnieten (16), bewirkt wird,
   wobei durch das Aufbringen der Kraft auf den Stopfenkopf, der Stopfenkopf, der Teil des zum Stopfenkopf hinweisenden Stopfenanteils als auch das Außengewinde gestaucht werden.

Die zweite Aufgabe wird gelöst durch die Angabe eines Bauteils aus einem Grundwerkstoff umfassend ein Loch mit einer Lochinnenwand und einem Innengewinde mit zumindest einem Innengewindegang sowie einen in dem Loch angebrachten Stopfen mit einem mit dem Innengewinde gefügten Außengewinde, wobei der Stopfen aus einem artgleichen und/oder artähnlichen Grundwerkstoff besteht und wobei durch das Aufbringen einer Kraft durch ein Mittel zumindest teilweise auf den Stopfenkopf das Außengewinde als auch der Stopfenkopf zumindest teilweise verformt sind, so dass der Stopfen fest mit dem Bauteil fixiert ist, und wobei das Loch einen Lochrand aufweist, und der Stopfenkopf im Wesentlichen plan mit dem Lochrand abschließt.
Erfindungsgemäß wird vorgeschlagen, den Stopfenkopf aus artgleichem und/oder artähnlichem Grundwerkstoff wie das Bauteil zum Beispiel mittels Radialtaumelnieten lokal gezielt plastisch zu verformen, so dass sich der Stopfen im Gewinde nicht mehr drehen lässt.

Durch die Erfindung wird eine Verdrehsicherung des Stopfens durch die lokale plastische Verformung zum Beispiel durch Anwendung des Radialtaumelnietens für Heißgasbauteile in Gasturbinen bewirkt. Die Erfindung sichert die Stopfen gegen ein Herausdrehen während der weiteren Bearbeitung des Bauteils nach dem Gießen und im Betrieb und reduziert andererseits durch Verwendung von artgleichem und/oder artähnlichem Grundwerkstoff die Wechselbeanspruchung.

Die Vorteile bei dem vorgeschlagenen, erfindungsgemäßen Verfahren und bei dem erfindungsgemäßen Bauteil sind wie folgt:
- Anwendung eines Stopfens aus artgleichem Grundwerkstoff ohne weitere Zusatzstoffe. Dadurch wird einerseits der Grundwerkstoff im Zusammenspiel zwischen Stopfen und Bauteil nicht geschwächt.Vermeidung von Spannungen durch unterschiedliche Ausdehnungskoeffizienten, die zu Rissbildungen führen.
- Auch wird erfindungsgemäß die Lebensdauer der Komponenten "Bauteil" und "Stopfen" erhöht.
- Zudem wird die Schrottrate beim Reparieren von Bauteilen mit Löchern signifikant reduziert.
- Auch werden alle angesprochenen Nachteile im Stand der Technik vermieden.
In den Unteransprüchen sind weitere vorteilhafte Maßnahmen aufgelistet, die beliebig miteinander kombiniert werden können, um weitere Vorteile zu erzielen.
Erfindungsgemäß werden durch das Aufbringen der Kraft auf den Stopfenkopf, der Stopfenkopf, der Teil des zum Stopfenkopf hinweisenden Stopfenanteils als auch das Außengewinde gestaucht. Dadurch fließt das Grundwerkstoff nach außen.

Erfindungsgemäß wird die Kraft durch ein Taumeln, insbesondere ein Radialtaumelnieten, bewirkt. Bevorzugt wird als Mittel ein oberes Gesenk verwendet. Das Radialtaumelnieten erlaubt eine gleichmäßige und definierte lokale plastische Verformung des leicht hervorstehenden Stopfenkopfes in radialer und axialer Richtung des Stopfens. Durch diese gezielte Verformung wird der obere Teil des Stopfens gestaucht, wodurch der Grundwerkstoff nach außen fließt.

Erfindungsgemäß weist das Loch einen Lochrand auf. Die aufzubringende Kraft bewirkt eine Verformung, wodurch der Stopfenkopf im Wesentlichen plan mit dem Lochrand abschließt.

Somit kann z.B. Kühlluft das Bauteil mit dem Stopfen besser überströmen.

Bevorzugt besteht das Bauteil aus artgleichem Grundwerkstoff wie der Stopfen, d.h. es werden keine Fremdmaterialien verwendet, die die Eigenschaften des Grundwerkstoffs abschwächen können. Außerdem werden thermische Spannungen durch unterschiedliche Ausdehnungskoeffizienten von angrenzenden Werkstoffen vermieden.

In bevorzugter Ausgestaltung wird als Grundwerkstoff eine Superlegierung, insbesondere eine Superlegierung mit hohem γ'-Anteil verwendet. Diese wird insbesondere in Heißgasbauteilen verarbeitet und eignet sich für die Anwendung in Gasturbinen.

Bevorzugt wird der Stopfen rotationssymmetrisch ausgebildet. Auch ist in besonderer Ausgestaltung der Stopfen eine Schraube.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

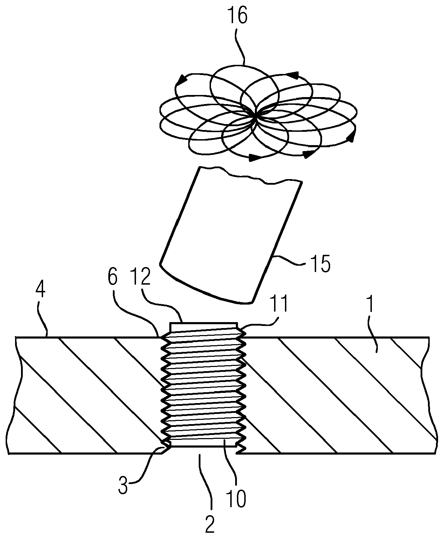

- FIG 1:: das Verfahren schematisch.

FIG 1 zeigt ein Bauteil 1 mit einem Loch 2 und einer Lochinnenwand mit einem Innengewinde 3. Das Bauteil 1 ist dabei bevorzugt aus einer Superlegierung, z.B. einer Nickelbasissuperlegierung mit hohem γ'-Anteil. FIG 1 zeigt zudem eine als Stopfen ausgebildete Schraube 10, mit einem in das Innengewinde 3 fügbaren Schraubenaußengewinde 11, und einem Schraubenkopf 12, wobei die Schraube 10 aus einem artgleichen Grundwerkstoff wie das Bauteil 1 besteht. Das Schraubenaußengewinde 11 wird nun in das Innengewinde 3 gefügt, so dass die Schraube 10 teilweise aus dem Loch 2 ragt. Erfindungsgemäß wird der Schraubenkopf 12 nun mittels Radialtaumelnieten 16 mit einem oberen Gesenk 15 lokal gezielt plastisch verformt, so dass sich die Schraube 10 im Gewinde 11,3 nicht mehr drehen lässt. Das Radialtaumelnieten 16 erlaubt eine gleichmäßige und definierte lokale plastische Verformung des leicht hervorstehenden Schraubenkopfes 12 in radialer und axialer Richtung der Schraube 10. Durch diese gezielte Verformung, wird der obere Teil der Schraube 10 gestaucht, wodurch der Grundwerkstoff nach außen fließt. Erfindungsgemäß liegt die Schraube 10 nach dem Taumelnieten 16 plan in der Bauteilebene 4, d.h. die Schraube 10 schließt plan mit dem Lochrand 6 ab. Zudem ist sie im Innengewinde 3 mechanisch stark verklammert, so dass sie nur mit einem hohen Moment wieder heraus geschraubt werden kann. Erfindungsgemäß werden keine Fremdmaterialien verwendet, die die Eigenschaften des Grundwerkstoffes abschwächen können. Dadurch werden Spannungen durch unterschiedliche Ausdehnungskoeffizienten von angrenzenden Werkstoffen vermieden. Die erfindungsgemäße "Verdrehsicherung" garantiert einen festen Sitz der Schraube 10 nicht nur im Betrieb, z.B. einer Turbinenschaufel, sondern auch schon während der weiteren Bearbeitung der Laufschaufel nach dem Gießen. Das erfindungsgemäße Verfahren vermeidet damit die Nachteile der bisher angewandten Schweißlösung und aller bekannten Alternativen des Standes der Technik. Zudem ist das erfindungsgemäße Verfahren kostengünstig.

Das erfindungsgemäße Verfahren kann auch zum Verschließen für größere Öffnungen/Kernhalteführungen im kaltgasseitigen Bereich von Schaufeln benutzt werden. Hierzu zählen z.B. Kernstützen im Kaltgasbereich von Leitschaufeln, die momentan mit artfremden oder arteigenen Stopfen zugeschweißt werden.

## Patentansprüche

1. Verfahren zum Verschließen eines Loches (2) mit einer Lochinnenwand und einem Innengewinde (3) mit zumindest einem Innengewindegang in einem Bauteil (1) aus einem Grundwerkstoff umfassend folgende Schritte:
- Bereitstellen eines Stopfens mit einem in das Innengewinde (3) fügbaren Außengewinde mit zumindest einem Außengewindegang, und einem Stopfenkopf, wobei der Stopfen aus einem artgleichen und/oder artähnlichen Grundwerkstoff besteht,
- Fügen des Außengewindes in das Innengewinde (3), so dass der Stopfenkopf zumindest teilweise aus dem Loch (2) ragt, **gekennzeichnet durch**
- Aufbringen einer Kraft **durch** ein Mittel zumindest teilweise auf den Stopfenkopf, so dass zumindest eine teilweise Verformung des Außengewindes als auch des Stopfenkopfes erzielt wird, wodurch der Stopfen mit dem Bauteil (1) mechanisch fest fixiert wird,
wobei die Kraft **durch** ein Taumeln, insbesondere ein Radialtaumelnieten (16), bewirkt wird,
wobei **durch** das Aufbringen der Kraft auf den Stopfenkopf, der Stopfenkopf, der Teil des zum Stopfenkopf hinweisenden Stopfenanteils als auch das Außengewinde gestaucht werden.

2. Verfahren nach Anspruch 1,
**dadurch gekennzeichnet, das s** als Mittel ein oberes Gesenk (15) verwendet wird.

3. Verfahren nach einem der beiden Ansprüche 1 oder 2,
d**adurch gekennzeichnet, das s** das Loch (2) einen Lochrand (6) aufweist, und die aufzubringende Kraft eine Verformung bewirkt, wodurch der Stopfenkopf im Wesentlichen plan mit dem Lochrand (6) abschließt.

4. Verfahren nach einem der vorhergehenden Ansprüche,
**dadurch gekennzeichnet, das s** als Grundwerkstoff des Bauteils (1) und des Stopfens ein artgleicher Grundwerkstoff verwendet wird.

5. Verfahren nach einem der vorhergehenden Ansprüche,
**dadurch gekennzeichnet, das s** als Grundwerkstoff eine Superlegierung, insbesondere eine Superlegierung mit hohem γ'-Anteil, verwendet wird.

6. Verfahren nach einem der vorhergehenden Ansprüche,
d**adurch gekennzeichnet, das s** der Stopfen rotationssymmetrisch ausgebildet wird.

7. Verfahren nach einem der vorhergehenden Ansprüche,
**dadurch gekennzeichnet, das s** der Stopfen als Schraube (10) ausgebildet wird.

8. Bauteil (1) aus einem Grundwerkstoff umfassend ein Loch (2) mit einer Lochinnenwand und einem Innengewinde (3) mit zumindest einem Innengewindegang sowie einen in dem Loch (2) angebrachten Stopfen mit einem mit dem Innengewinde (3) gefügten Außengewinde,
wobei der Stopfen aus einem artgleichen und/oder artähnlichen Grundwerkstoff besteht, **dadurch gekennzeichnet, dass** durch das Aufbringen einer Kraft durch ein Mittel zumindest teilweise auf den Stopfenkopf, das Außengewinde als auch der Stopfenkopf zumindest teilweise verformt ist, so dass der Stopfen fest mit dem Bauteil (1) fixiert ist,
und wobei das Loch (2) einen Lochrand (6) aufweist, und der Stopfenkopf im Wesentlichen plan mit dem Lochrand (6) abschließt.

9. Bauteil (1) nach Anspruch 8,
**dadurch gekennzeichnet**, das s das Bauteil (1) und der Stopfen aus artgleichem Grundwerkstoff bestehen.

10. Bauteil (1) nach einem der Ansprüche 8 oder 9,
**dadurch gekennzeichnet, das s** der Stopfen eine Schraube (10) ist.

11. Bauteil (1) nach einem der Ansprüche 8 bis 10,
**dadurch gekennzeichnet, das s** das Bauteil (1) und der Stopfen eine Superlegierung, insbesondere eine Superlegierung mit hohem y'-Anteil umfassen.

## Claims

1. Method for closing a hole (2), having a hole inner wall and an internal thread (3) having at least one internal thread turn, in a component (1) of a base material, comprising the following steps:
- providing a plug having an external thread, which can be fitted into the internal thread (3) and has at least one external thread turn, and a plug head, wherein the plug consists of a base material of the same type and/or a similar type,
- fitting the external thread into the internal thread (3) so that the plug head protrudes at least partially from the hole (2), **characterized by**
- at least partially applying a force to the plug head by a means so that at least a partial deformation of the external thread and of the plug head is achieved, as a result of which the plug is mechanically securely fixed to the component (1),
wherein the force is brought about by wobbling, in particular radial riveting (16),
wherein, by applying the force to the plug head, the plug head, the part of the plug portion facing the plug head, and the external thread are compressed.

2. Method according to Claim 1,
**characterized in that**
an upper die (15) is used as the means.

3. Method according to either of Claims 1 and 2,
**characterized in that**
the hole (2) has a hole periphery (6), and the force to be applied brings about a deformation, as a result of which the plug head finishes substantially flush with the hole periphery (6).

4. Method according to one of the preceding claims,
**characterized in that**
a base material of the same type is used as the base material of the component (1) and of the plug.

5. Method according to one of the preceding claims,
**characterized in that**
a superalloy, in particular a superalloy with a high y' fraction, is used as the base material.

6. Method according to one of the preceding claims,
**characterized in that**
the plug is of a rotationally symmetrical form.

7. Method according to one of the preceding claims,
**characterized in that**
the plug is in the form of a screw (10).

8. Component (1) of a base material, comprising a hole (2), having a hole inner wall and an internal thread (3) having at least one internal thread turn, and a plug mounted in the hole (2) and having an external thread fitted to the internal thread (3),
wherein the plug consists of a base material of the same type and/or a similar type, **characterized in that**, by at least partially applying a force to the plug head by a means, the external thread and the plug head are at least partially deformed so that the plug is securely fixed to the component (1),
and wherein
the hole (2) has a hole periphery (6), and the plug head finishes substantially flush with the hole periphery (6).

9. Component (1) according to Claim 8,
**characterized in that**
the component (1) and the plug consist of base material of the same type.

10. Component (1) according to either of Claims 8 and 9,
**characterized in that**
the plug is a screw (10).

11. Component (1) according to one of Claims 8 to 10,
**characterized in that**
the component (1) and the plug comprise a superalloy, in particular a superalloy with a high y' fraction.

## Revendications

1. Procédé de fermeture d'un trou (2) ayant une paroi intérieure et un taraudage (3) à au moins un filet dans une pièce (1) en un matériau de base, comprenant les stades suivants :
- on se procure un bouchon ayant un filetage à au moins un pas assemblable dans le taraudage (3) et une tête de bouchon, le bouchon étant en le même type de matériau ou de type semblable,
- on assemble le filetage dans le taraudage (3), de manière à ce que la tête du bouchon dépasse, au moins en partie, du trou (2), **caractérisé par**
- on applique une force, par un moyen, au moins en partie sur la tête du bouchon, de manière à obtenir au moins une déformation en partie du filetage, ainsi que de la tête du bouchon, grâce à quoi le bouchon est fixé d'une manière fixe mécaniquement à la pièce (1), la force étant provoquée par un fluage, notamment par un rivetage par fluage radial, la partie de la proportion du bouchon indiquant la tête du bouchon, ainsi qu'également le filetage étant refoulé par l'application de la force sur la tête du bouchon.

2. Procédé suivant la revendication 1,
**caractérisé en ce que**
l'on utilise, comme moyen, une étampe (15) supérieure.

3. Procédé suivant l'une des deux revendications 1 ou 2,
**caractérisé en ce que**
le trou (2) a un bord (6) et la force appliquée provoque une déformation, grâce à quoi la tête du bouchon est sensiblement à affleurement suivant un plan avec le bord (6) du trou.

4. Procédé suivant l'une des revendications précédentes,
dans lequel on utilise, comme matériau de base de la pièce (1) et du bouchon, un matériau de base de même type.

5. Procédé suivant l'une des revendications précédentes,
**caractérisé en ce que**
l'on utilise, comme matériau de base, un superalliage, notamment un superalliage ayant une grande proportion de y'.

6. Procédé suivant l'une des revendications précédentes,
**caractérisé en ce que**
le bouchon est de révolution.

7. Procédé suivant l'une des revendications précédentes,
**caractérisé en ce que**
le bouchon est constitué sous la forme d'une vis (10).

8. Pièce (1) en un matériau de base, comprenant un trou (2) ayant une paroi intérieure et un taraudage (3) à au moins un pas, ainsi qu'un bouchon mis dans le trou (2) et ayant un filetage assemblé au taraudage (3),
le bouchon étant en le même type de matériau de base et/ou de type semblable, **caractérisé en ce que**, par l'application d'une force par un moyen, au moins en partie sur la tête du bouchon, le filetage, ainsi que la tête du bouchon, est déformé, au moins en partie, de sorte que le bouchon est fixé fixement à la pièce (1),
et dans lequel
le trou (2) a un bord (6) et la tête du bouchon est sensiblement à affleurement suivant un plan avec le bord (6) du trou.

9. Pièce (1) suivant la revendication 8,
**caractérisée en ce que**
la pièce (1) et le bouchon sont en un matériau de base de même type.

10. Pièce (1) suivant l'une des revendications 8 ou 9,
**caractérisée en ce que**
le bouchon est une vis (10).

11. Pièce (1) suivant l'une des revendications 8 à 10,
**caractérisée en ce que**
la pièce (1) et le bouchon comprennent un superalliage, notamment un superalliage à grande proportion de γ'.
